# EUROPÄISCHE PATENTSCHRIFT

(11) **EP 0 949 042 B1**
(45) Veröffentlichungstag und Bekanntmachung des Hinweises auf die Patenterteilung: **21.08.2002**
(21) Anmeldenummer: 97122348.2
(22) Anmeldetag: 18.12.1997
(51) Int. Cl.: B23Q 1/01

(54) **Werkzeugmaschine, insbesondere Bohr- und Fräsmaschine**
Machine tool,especially boring and drilling machine
Machine-outil,en particulier perceuse-fraiseuse

(43) Veröffentlichungstag der Anmeldung: 13.10.1999
(73) Patentinhaber: Maschinenfabrik Berthold Hermle AG, 78550 Gosheim (DE)
(72) Erfinder: Braun, Hans-Dieter, 78665 Frittlingen (DE)
(74) Vertreter: Vetter, Hans, Dipl.-Phys. Dr.

(56) Entgegenhaltungen:
- EP-A- 0 712 682
- DE-A- 1 477 580
- DE-A- 3 638 350
- DE-C- 37 425
- DE-C- 853 999
- GB-A- 1 237 135

## Beschreibung

Die Erfindung betrifft eine Werkzeugmaschine, insbesondere eine Bohr- und Fräsmaschine, gemäß dem Oberbegriff des Anspruchs 1.

Bei einer derartigen, aus der EP-A-0 712 682 bekannten Werkzeugmaschine ist der Bearbeitungskopf am zweiten Schlitten vertikal motorisch bewegbar geführt, um eine Bearbeitung eines auf einem ortsfesten Bearbeitungstisch fixierten Werkstücks in den drei Raumachsen durchführen zu können.

Ein motorisch vertikal bewegbarer Bearbeitungskopf mit einem Spindelantrieb ist technisch relativ aufwendig, insbesondere wenn eine hohe Bearbeitungspräzision erforderlich ist. Vor allem bei kleinen Werkzeugmaschinen stellt die Kostenseite häufig ein großes Problem dar.

Zur Vermeidung eines vertikal bewegbaren Bearbeitungskopfes ist aus der DE-A-1 477 580, der EP-B-0 659 520 der "dima", Fachzeitschrift für Fertigungstechnik und Konstruktion, Ausgabe 5/6-97, Seiten 66, 67 sowie aus der Anzeige der Firma Hermle in der Zeitschrift "NC-Fertigung", Ausgabe 1/97, ein motorisch angetriebener vertikal bewegbarer Bearbeitungstisch bekannt. Dieser ist jedoch in keiner dieser Dokumente in einem Bearbeitungsbereich angeordnet, der durch zwei Seitenwandungen und einen diese Seitenwandungen verbindenden Ständerbereich gebildet wird. Weiterhin ist in keinem dieser Dokumente eine in einem Ständerbereich angeordnete Werkzeugwechsleranordnung bekannt, an dem auch die vertikalen Führungsschienen für den Bearbeitungstisch angebracht sind.

Eine Aufgabe der vorliegenden Erfindung besteht daher darin, eine Werkzeugmaschine der eingangs genannten Gattung bei hoher Präzision durch konstruktiv einfachere Gestaltung kostengünstiger zu realisieren.

Diese Aufgabe wird erfindungsgemäß durch eine Werkzeugmaschine mit den Merkmalen des Anspruchs 1 gelöst.

Der besondere Vorteil der erfindungsgemäßen Lösung besteht darin, dass durch die Einheit von Bearbeitungskopf und zweitem Schlitten eine kostengünstige Spindel und ein einfacher Spindelantrieb über den zweiten Schlitten realisiert werden können. Beispielsweise kann als Spindelantrieb ein luftgekühlter Motor mit einem einfachen Spindelantrieb, z.B. Zahnriemenantrieb, gewählt werden, der im zweiten Schlitten integriert ist. Ein Spindelkühlaggregat oder eine Ölumlaufschmierung kann entfallen. Eine Feststelleinrichtung für den Bearbeitungskopf am zweiten Schlitten ist ebenfalls nicht erforderlich. Demgegenüber ist der Aufwand für eine Vertikalführung des Bearbeitungstisches relativ gering. Durch die Einheit von Bearbeitungskopf und zweitem Schlitten entsteht darüber hinaus eine mechanisch sehr stabile und daher hochpräzise Anordnung.

Die erfindungsgemäße Werkzeugmaschine besteht im wesentlichen somit nur aus vier Hauptbauteilen, die alle zentrenbearbeitungsfähig sind. Es sind keine ausfahrenden Achsen in den drei Raumrichtungen vorhanden, wodurch Stabilität und Steifigkeit in praktisch allen Bearbeitungspositionen in hohem Maße vorhanden sind.

Dadurch, dass der Maschinenständer zwei beabstandete Seitenwandungen besitzt, in deren als Bearbeitungsbereich ausgebildetem Zwischenraum die vertikalen Führungsschienen des Bearbeitungstisches angeordnet sind, entsteht eine sehr kompakte und stabile Anordnung. Der Bearbeitungstisch ist dabei vorzugsweise im wesentlichen oder vollständig zwischen den Seitenwandungen angeordnet.

In vorteilhafter Weise ist ein den Bearbeitungsbereich nach einer dritten Seite hin begrenzender, die beiden Seitenwandungen verbindender Ständerbereich vorgesehen, an dem vorzugsweise die vertikalen Führungsschienen des Bearbeitungstisches angeordnet sind.

Der die beiden Seitenwandungen verbindende Ständerbereich dient zusätzlich noch zur Aufnahme einer Werkzeugwechsleranordnung, wodurch zum einen eine sehr schmale Bauform durch diese Integration der Werkzeugwechsleranordnung im Maschinenbett erreicht werden kann, und zum anderen eine gesonderte Wechslerabdeckung entfallen kann. Es wird somit kein zusätzlicher Platzbedarf für die Wechsleranordnung, insbesondere in der Bewegungsrichtung des ersten Schlittens benötigt.

Durch die in den Unteransprüchen aufgeführten Maßnahmen sind vorteilhafte Weiterbildungen und Verbesserungen der im Anspruch 1 angegebenen Werkzeugmaschine möglich.

Vorzugsweise ist eine dritte mittlere Führungsschiene für den ersten Schlitten auf dem die Seitenwandungen verbindenden Ständerbereich angeordnet, wobei die mittlere Führungsschiene in Längsrichtung gegenüber den beiden anderen Führungsschienen versetzt angeordnet ist. Auch diese Maßnahme verbessert noch zusätzlich den kompakten und präzisen Aufbau der Werkzeugmaschine.

Eine mechanisch sehr stabile und hochpräzise Schlittenführung für den ersten Schlitten wird dadurch erreicht, dass je eine seiner parallelen Führungsschienen auf den beiden Seitenwandungen angeordnet ist.

Die mittlere Führungsschiene für den ersten Schlitten ist zweckmäßigerweise außermittig zwischen den beiden anderen Führungsschienen für den ersten Schlitten neben der Werkzeugwechsleranordnung angeordnet. Hierdurch ist die Werkzeugwechsleranordnung für den Bearbeitungskopf leicht erreichbar, und eine gesonderte Mittentraverse kann entfallen.

Um dem vertikal unbeweglichen Bearbeitungskopf Rechnung zu tragen, ist die Werkzeugwechsleranordnung zweckmäßigerweise mit einer Schwenkeinrichtung zur Durchführung von vertikalen Schwenkbewegungen zu einer Werkzeugaufnahme des Bearbeitungskopfeshin undvondiesem weg versehen, wie sie beispielsweise aus der EP-A-0 860 233 bekannt ist.

Um einen schnellen und einfachen Zugriff zur Werkzeugwechsleranordnung durch den Bearbeitungskopf zu ermöglichen, besitzt der die Seitenwandungen verbindende Ständerbereich einen nach oben hin offenen Werkzeugwechselbereich, in dem der Werkzeugaufnahmebereich des Bearbeitungskopfes horizontal bis zur Werkzeugwechselposition bewegbar ist.

Die Werkzeugwechsleranordnung besitzt zweckmäßigerweise eine geschlossene Werkzeugbahn, entlang derer die Werkzeuge bewegbar und bis zur Werkzeugwechselposition verfahrbar sind, wie dies an sich bei der zitierten Werkzeugwechsleranordnung bekannt ist.

Zur weiteren Erhöhung der Stabilität und Steifigkeit und zur Erzielung einer hohen Bearbeitungspräzision sind zwei am ersten Schlitten angeordnete Führungsschienen für den zweiten Schlitten übereinander und in der Bewegungsrichtung des ersten Schlittens versetzt angeordnet, wobei der zweite Schlitten den ersten Schlitten im Führungsschienenbereich übergreift.

Ein Ausführungsbeispiel der Erfindung ist in der Zeichnung dargestellt und in der nachfolgenden Beschreibung näher erläutert. Es zeigen:
- Fig. 1: eine Seitenansicht einer Werkzeugmaschine als Ausführungsbeispiel der Erfindung,
- Fig. 2: eine Vorderansicht der in Fig. 1 dargestellten Werkzeugmaschine,
- Fig. 3: eine Draufsicht der in Fig. 1 dargestellten Werkzeugmaschine,
- Fig. 4: eine Schnittdarstellung dieser Werkzeugmaschine gemäß der Schnittlinie A-B in Fig. 3 und
- Fig. 5: eine Schnittdarstellung dieser Werkzeugmaschine gemäß der Schnittlinie C-D in Fig. 3.

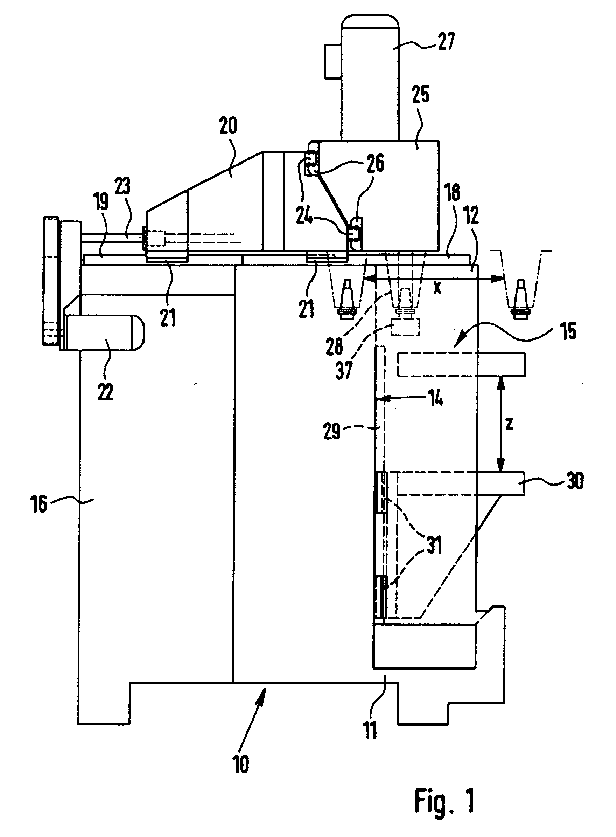

Die in den Fig. 1 bis 5 dargestellte Bohr- und Fräsmaschine kann als reine Bohrmaschine, Schleifmaschine oder Fräsmaschine oder als kombiniertes Bearbeitungszentrum ausgebildet sein.

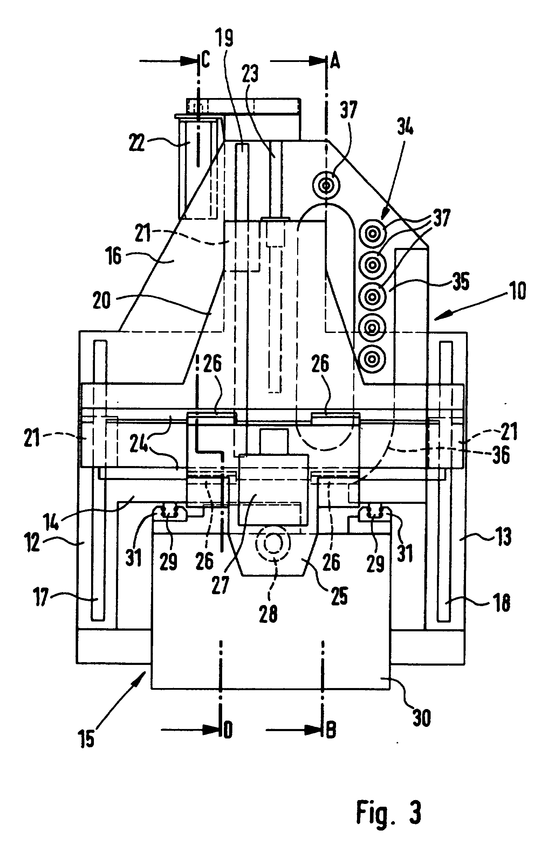

Ein ein Maschinenbett bildender Maschinenständer 10 besitzt einen unteren Basisbereich 11, von dem aus sich an zwei gegenüberliegenden Seiten zwei Seitenwandungen 12, 13 nach oben erstrecken. Diese Seitenwandungen 12, 13 sind an ihren einen Endbereichen über eine Querwandung 14 miteinander verbunden. Der von den Seitenwandungen 12, 13 und der Querwandung 14 seitlich und von unten durch den Basisbereich 11 begrenzte Bereich bildet einen Bearbeitungsbereich 15 der Maschine. Von der vom Bearbeitungsbereich 15 abgewandten Seite der Querwandung 14 aus erstreckt sich ein im wesentlichen mittiger Fortsatz 16 nach hinten, so daß die Querwandung 14 zusammen mit dem mittigen Fortsatz 16 gemäß Fig. 3 eine angenähert dreieckige Oberseite aufweist.

Auf den beiden Seitenwandungen 12, 13 sind zwei parallele Führungsschienen 17, 18 in der Längsrichtung dieser Seitenwandungen 12, 13 bzw. in der Längsrichtung des Maschinenständers 10 fixiert. Eine dritte Führungsschiene 19 ist zwischen den Führungsschienen 17, 18 und parallel zu diesen in der Längsrichtung versetzt auf den mittigen Fortsatz 16 und der Querwandung 14 fixiert. Die dritte Führungsschiene 19 ist dabei außermittig angeordnet. Diese drei Führungsschienen 17 - 19 sind in derselben horizontalen Ebene angeordnet, jedoch ist es beispielsweise auch möglich, die dritte Führungsschiene 19 in einer anderen Ebene anzuordnen. Eine derartige Führungsschienenanordnung ist beispielsweise aus der EP-A-0 712 682 bekannt. In einer einfacheren Ausführung kann die dritte Führungsschiene auch entfallen.

Ein Längsschlitten 20 ist mittels dreier Führungselemente 21 an den drei Führungsschienen 17 - 19 horizontal längsverschiebbar geführt. Hierdurch wird eine stabile Dreipunktauflage erreicht. Ein am hinteren Ende des Fortsatzes 16 angeordneter motorischer Antrieb 22 treibt eine Längsspindel 23 an, durch die der Längsschlitten 20 in der Längsrichtung motorisch verfahrbar ist.

Der Längsschlitten 20 weist an seiner dem Bearbeitungsbereich 15 zugewandten Vorderseite zwei übereinander angeordnete und in der Längsrichtung der Führungsschienen 17-19 zueinander versetzte Querschienen 24 auf, an denen ein Querschlitten 25 mittels Führungselementen 26 quer zur Bewegungsrichtung des Längsschlittens 20 horizontal verschiebbar geführt ist. Infolge der Versetzung der Führungselemente 26 in der Längsrichtung entsteht eine schräge Verbindungsfläche zwischen den beiden Schlitten 20, 25, und der Querschlitten 25 übergreift den Längsschlitten 20 im Versetzungsbereich der Querschienen 24. Der motorische Antrieb des Querschlittens 25 erfolgt über einen nicht dargestellten, am oder im Längsschlitten 20 angeordneten Antriebsmotor und über eine entsprechende Querspindel. Prinzipiell kann auch der Antriebsmotor im Querschlitten 25 angeordnet sein.

Der Querschlitten 25 weist einen integrierten Bearbeitungskopf auf, wobei der Bearbeitungskopf im selben Gehäuse und vertikal nicht verschiebbar angeordnet ist. Ein Antriebsmotor 27 für den Bearbeitungskopf ragt oben aus dem Querschlitten 25 heraus, und eine Werkzeugspindel 28 ist unterhalb des Querschlittens 25 an diesem angeordnet und dient zur Aufnahme von Werkzeugen. Sie wird durch eine nicht dargestellte Anordnung im Inneren des Querschlittens 25 vom Antriebsmotor 27 angetrieben. Jegliche Vorrichtungen, die bei bekannten Maschinen dieser Art zur vertikalen Verschiebung der Werkzeugspindel 28 dienen, entfallen hier.

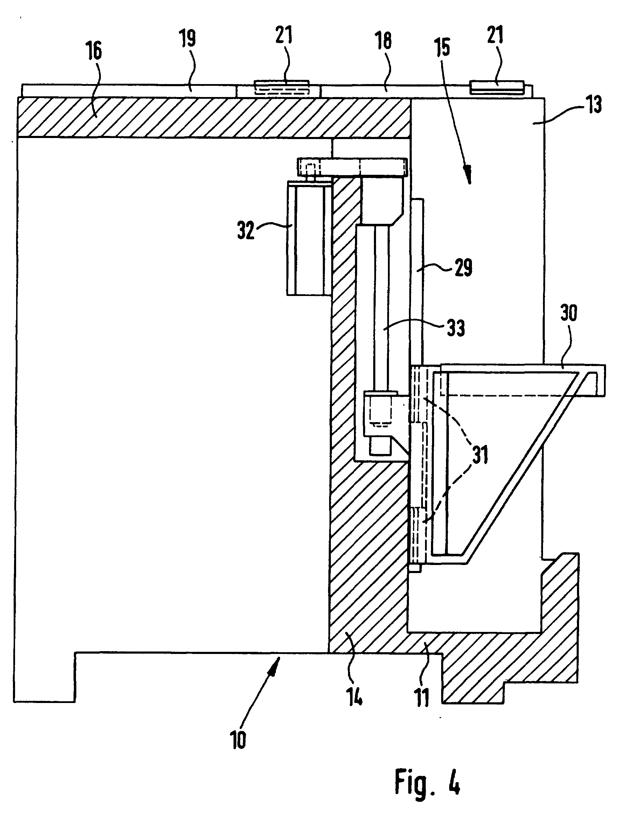

An der Querwandung 14 im Bearbeitungsbereich 15 sind zwei vertikale Führungsschienen 29 angeordnet, an denen ein Werkstücktisch 30 mit horizontaler Werkstückaufnahmefläche mittels Führungselementen 31 vertikal verschiebbar geführt ist. Zur motorischen Bewegung dient eine von einem Antriebsmotor 32 angetriebene Antriebsspindel 33. Gemäß Fig. 4 ist der Antriebsmotor 32 im Innenraum des Maschinenständers 10 angeordnet, und die Antriebsspindel 33 ist in der Querwandung 14 versenkt gelagert.

Zur Bearbeitung eines nicht dargestellten, auf dem Werkstücktisch 30 aufgespannten Werkstücks werden die horizontalen Bewegungen (X-Achse und Y-Achse) durch die beiden Schlitten 20, 25 ausgeführt, während die Vertikalbewegung (Z-Achse) durch entsprechende Steuerung des Werkstücktisches 30 realisiert wird.

Es ist selbstverständlich auch noch möglich, auf dem Werkstücktisch 30 eine dreh- oder schwenkbare Werkstückhalterung zu fixieren, um auch eine Mehrachs-Bearbeitung mit mehr als drei Achsen realisieren zu können. In Fig. 1 ist die Bewegung der Werkzeugspindel 28 in der X-Richtung und die Bewegung des Werkstücktisches 30 in der Z-Richtung schematisch dargestellt.

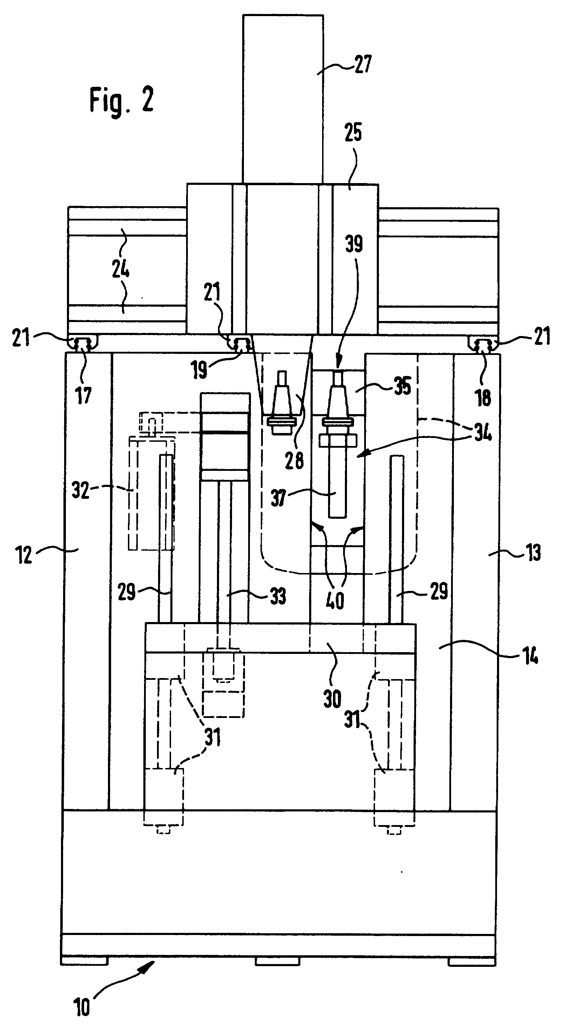

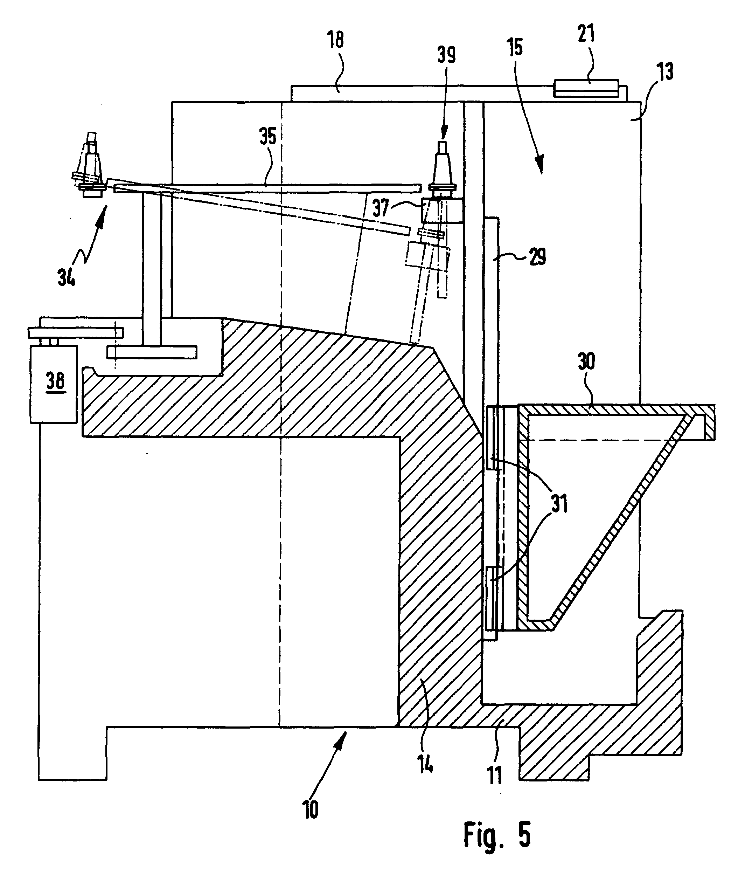

Gemäß den Fig. 3 und 5 in Verbindung mit Fig. 2 ist die Unterbringung eines Werkzeugwechslers 34 in einem Hohlraum des Maschinenständers 10 neben der außermittigen Führungsschiene 19 dargestellt. Dieser Werkzeugwechsler ist beispielsweise gemäß der EP-A-0 860 233 ausgebildet und besteht aus einer vertikal schwenkbaren Werkzeughalterung 35, die eine geschlossene, motorisch antreibbare Umlaufbahn 36 für Werkzeuge 37 aufweist. Ein in Fig. 5 dargestellter Antriebsmotor 38 dient zur Bewegung der Werkzeuge 37 entlang der Umlaufbahn 36. Das jeweils von der Werkzeugspindel 28 aufzunehmende Werkzeug 37 wird in eine Werkzeugwechselposition 39 gebracht, die dem Bearbeitungsbereich 35 am nächsten liegt, und die Werkzeugspindel 28 kann dann durch entsprechende Bewegung der beiden Schlitten 20, 25 durch eine schlitzartige Öffnung 40 in der Querwandung 14 hindurch zur Werkzeugwechselposition 39 bewegt werden. Dort wird dann durch Hochschwenken der Werkzeughalterung 35 das jeweilige Werkzeug in die Werkzeugspindel 28 eingesetzt. Entsprechend erfolgt das Herausnehmen eines Werkzeugs aus der Werkzeugspindel 28 in der umgekehrten Weise.

Das Beladen des Werkzeugwechslers 34 mit Werkzeugen 37 erfolgt von hinten her, also in einem Bereich, der der Werkzeugwechselposition 39 gegenüberliegt. Soweit der Werkzeugwechsler 34 nicht vollständig vom Maschinenständer 10 aufgenommen ist und gegebenenfalls aus diesem zumindest im hinteren Bereich herausragt, kann noch eine zusätzliche Abdeckung vorgesehen sein.

Da der Bearbeitungsbereich 15 vollständig innerhalb der Seitenwandungen 12, 13 liegt, können mehrere derartige Maschinen direkt nebeneinander aufgereiht werden, so daß ein Reihenmaß von ca. 150 cm erreicht werden kann.

In Abwandlung des dargestellten Ausführungsbeispiels kann prinzipiell auch ein Querschlitten auf der Querwandung 14 und/oder einem Verbindungsteil zwischen den beiden Seitenwandungen 12, 13 geführt sein, auf dem dann ein Längsschlitten bewegbar ist. Allerdings muß bei einer derartigen Konstruktion eine ausfahrende Achse in der X-Richtung in Kauf genommen werden, während beim Ausführungsbeispiel keinerlei ausfahrende Achsen vorhanden sind.

## Patentansprüche

1. Werkzeugmaschine, insbesondere Bohr- und Fräsmaschine, mit einem Maschinenständer (10), auf dem ein an Führungsschienen (17, 18) geführter, motorisch angetriebener erster Schlitten (20) in einer ersten horizontalen Bewegungsrichtung bewegbar ist, wobei ein motorisch angetriebener zweiter Schlitten (25) in einer zweiten horizontalen Bewegungsrichtung senkrecht zur ersten Bewegungsrichtung am ersten Schlitten (20) geführt ist, mit einem am zweiten Schlitten (25) angeordneten, eine Antriebsvorrichtung (27) für wenigstens ein rotierendes Werkzeug (37) aufweisenden Bearbeitungskopf (28) der zusammen mit dem zweiten Schlitten (25) eine vertikal nicht verschiebbare Einheit bildet und mit einem Bearbeitungstisch (30) unterhalb des Bearbeitungskopfes (28) der am Maschinenständer (10) geführt ist und einen motorischen Antrieb (32) zur Durchführung von vertikalen Bearbeitungsbewegungen bei der Bearbeitung von Werkstücken durch den Bearbeitungskopf (28) aufweist, **dadurch gekennzeichnet, dass** der Maschinenständer (10) zwei beabstandete Seitenwandungen (12, 13) besitzt, in deren als Bearbeitungsbereich (15) ausgebildetem Zwischenraum die vertikalen Führungsschienen (29) des Bearbeitungstisches an einem die beiden Seitenwandungen verbindenden Ständerbereich (14, 16) angeordnet sind, der den Bearbeitungsbereich (15) nach einer dritten Seite hin begrenzt, und der eine Werkzeugwechsleranordnung (34) aufnimmt.

2. Werkzeugmaschine nach Anspruch 1, **dadurch gekennzeichnet, dass** der Bearbeitungstisch (30) im wesentlichen oder vollständig zwischen den Seitenwandungen (12, 13) angeordnet ist.

3. Werkzeugmaschine nach Anspruch 1 oder 2, **dadurch gekennzeichnet, dass** je eine der parallelen Führungsschienen (17, 18) für den ersten Schlitten (20) auf den beiden Seitenwandungen (12, 13) angeordnet ist.

4. Werkzeugmaschine nach einem der vorhergehenden Ansprüche, **dadurch gekennzeichnet, dass** eine dritte mittlere Führungsschiene (19) für den ersten Schlitten (20) auf dem die Seitenwandungen verbindenden Ständerbereich (14, 16) in Längsrichtung versetzt zu den beiden anderen Führungsschienen (17, 18) angeordnet ist.

5. Werkzeugmaschine nach Anspruch 4, **dadurch gekennzeichnet, dass** die mittlere Führungsschiene (19) für den ersten Schlitten (20) außermittig zwischen den beiden anderen Führungsschienen (17, 18) für den ersten Schlitten (20) neben der Werkzeugwechsleranordnung (34) angeordnet ist.

6. Werkzeugmaschine nach einem der vorhergehenden Ansprüche, **dadurch gekennzeichnet, dass** die Werkzeugwechsleranordnung (34) mit einer Schwenkeinrichtung (35) zur Durchführung von vertikalen Schwenkbewegungen zu einer Werkzeugaufnahme des Bearbeitungskopfes hin und von diesem weg versehen ist.

7. Werkzeugmaschine nach Anspruch 6, **dadurch gekennzeichnet, dass** der die Seitenwandungen (12, 13) verbindende Ständerbereich (14, 16) einen nach oben hin offenen Werkzeugwechselbereich (40) besitzt, in dem die Werkzeugaufnahme (28) des Bearbeitungskopfes horizontal bis zur Werkzeugwechselposition (39) bewegbar ist.

8. Werkzeugmaschine nach einem der vorhergehenden Ansprüche, **dadurch gekennzeichnet, dass** die Werkzeugwechsleranordnung (34) eine geschlossene Werkzeugbahn (36) besitzt, entlang derer die Werkzeuge (37) jeweils bis zur Werkzeugwechselposition (39) verfahrbar sind.

9. Werkzeugmaschine nach einem der vorhergehenden Ansprüche, **dadurch gekennzeichnet, dass** zwei am ersten Schlitten (20) angeordnete Führungsschienen (24) für den zweiten Schlitten (25) übereinander und in der Bewegungsrichtung des ersten Schlittens (20) versetzt angeordnet sind, und der zweite Schlitten (25) den ersten Schlitten im Führungsschienenbereich übergreift.

10. Werkzeugmaschine nach einem der vorhergehenden Ansprüche, **dadurch gekennzeichnet, dass** der erste Schlitten (20) ein Längsschlitten und der zweite Schlitten (25) ein Querschlitten ist.

## Claims

1. Machine tool, in particular drilling and/or milling machine, with a machine column (10) on which a motor-driven first slide (20) guided on guide rails (17,18) may be driven in a first horizontal direction of movement, while a motor-driven second slide (25) is guided on the first slide (20) in a second horizontal direction of movement at right-angles to the first direction of movement, with a machining head (28) mounted on the second slide (25) and having a drive mechanism (27) for one or more rotating tools (37), said machining head forming together with the second slide (25) a unit which is incapable of sliding vertically, and with a machining table (30) below the machining head (28), which is guided on the machine column (10) and has a motor drive (32) to execute vertical machining movements during the machining of workpieces by the machining head (28), **characterised in that** the machine column (10) has two side walls (12, 13) spaced apart and with an intermediate space forming the machining zone (15) in which the vertical guide rails (29) of the machining table are arranged on a column area (14, 16) which connects the two side walls and bounds the machining zone (15) towards a third side and accommodates a tool changer assembly (34).

2. Machine tool according to claim 1, **characterised in that** the machining table (30) is substantially or entirely located between the side walls (12, 13).

3. Machine tool according to claim 1 or 2, **characterised in that** in each case one of the parallel guide rails (17, 18) for the first slide (20) is fitted to one of the two side walls (12, 13).

4. Machine tool according to any of the preceding claims, **characterised in that** a third central guide rail (19) for the first slide (20) is fitted to the column area (14, 16) connecting the side walls, and is offset relative to the two other guide rails (17, 18) in the longitudinal direction.

5. Machine tool according to claim 4, **characterised in that** the central guide rail (19) for the first slide (20) is arranged off-centre between the two other guide rails (17, 18) for the first slide (20) alongside the tool changer assembly (34).

6. Machine tool according to any of the preceding claims, **characterised in that** the tool changer assembly (34) is provided with a swivel device (35) to execute vertical swivel movements towards and away from a tool mounting of the machining head.

7. Machine tool according to claim 6, **characterised in that** the column area (14, 16) connecting the side walls (12, 13) has a tool changing zone (40), open towards the top, in which the tool mounting (28) of the machining head may be moved horizontally as far as the tool change position (39).

8. Machine tool according to any of the preceding claims, **characterised in that** the tool changer assembly (34) has an enclosed tool track (36), along which the tools (37) may in each case be moved as far as the tool change position (39).

9. Machine tool according to any of the preceding claims, **characterised in that** guide rails (24) for the second slide (25) fitted on to the first slide (20) are arranged above one another and offset in the direction of movement of the first slide (20), and the second slide (25) overlaps the first slide in the area of the guide rails.

10. Machine tool according to any of the preceding claims, **characterised in that** the first slide (20) is a longitudinal slide and the second slide (25) is a transverse slide.

## Revendications

1. Machine-outil, en particulier aléseuse-fraiseuse, comportant un montant de machine (10) sur lequel est déplaçable un premier chariot (20), guidé sur des rails de guidage (17, 18) et entraîné au moyen d'un moteur, dans une première direction horizontale de déplacement, un deuxième chariot (25), entraîné au moyen d'un moteur, étant guidé sur le premier chariot (20), dans une direction horizontale de déplacement perpendiculaire à la première direction de déplacement, comportant une tête d'usinage (28) disposée sur le deuxième chariot (25) et comportant un dispositif d'entraînement (27) pour au moins un outil rotatif (37), laquelle tête d'usinage forme avec le deuxième chariot (25) un ensemble qui ne peut coulisser verticalement, et comportant une table d'usinage (30) au-dessous de la tête d'usinage (28), qui est guidée sur le montant de machine (10) et qui comporte un dispositif d'entraînement (32) à moteur pour exécuter des mouvements verticaux d'usinage pendant l'usinage de pièces par la tête d'usinage (28), **caractérisée en ce que** le montant de machine (10) possède deux parois latérales (12, 13) espacées l'une de l'autre dont l'espace intermédiaire, réalisé en tant que zone d'usinage (15), reçoit les rails de guidage verticaux (29) de la table d'usinage sur une zone (14, 16) du montant qui relie les deux parois latérales et qui limite la zone d'usinage (15) vers un troisième côté, et qui reçoit un ensemble de changeur d'outil (34).

2. Machine-outil selon la revendication 1, **caractérisée en ce que** la table d'usinage (30) est disposée sensiblement ou entièrement entre les parois latérales (12, 13).

3. Machine-outil selon la revendication 1 ou 2, **caractérisée en ce que** l'un des rails de guidage (17, 18) parallèles pour le premier chariot (20) est disposé sur les deux parois latérales (12, 13).

4. Machine-outil selon l'une des revendications précédentes, **caractérisée en ce qu'**un troisième rail de guidage central (19) pour le premier chariot (20) est disposé sur la zone (14, 16) du montant qui relie les parois latérales, décalé dans la direction longitudinale par rapport aux deux autres rails de guidage (17, 18).

5. Machine-outil selon la revendication 4, **caractérisée en ce que** le rail de guidage central (19) pour le premier chariot (20) est disposé excentré entre les deux autres rails de guidage (17, 18) pour le premier chariot (20) à côté de l'ensemble de changeur d'outil (34).

6. Machine-outil selon l'une des revendications précédentes, **caractérisée en ce que** l'ensemble de changeur d'outil (34) est pourvu d'un dispositif de pivotement (35) pour l'exécution de mouvements verticaux de pivotement vers un logement d'outil de la tête d'usinage, et à partir de celui-ci.

7. Machine-outil selon la revendication 6, **caractérisée en ce que** la zone (14,16) du montant, qui relie les parois latérales (12, 13), possède une zone d'échange d'outil (40) ouverte vers le haut, dans laquelle le logement d'outil (28) de la tête d'usinage est déplaçable horizontalement jusqu'à la position d'échange d'outil (39).

8. Machine-outil selon l'une des revendications précédentes, **caractérisée en ce que** l'ensemble de changeur d'outil (34) possède une voie d'outil (36) fermée le long de laquelle les outils (37) sont déplaçables chacun jusqu'à la position d'échange d'outil (39).

9. Machine-outil selon l'une des revendications précédentes, **caractérisée en ce que** deux rails de guidage (24), disposés sur le premier chariot (20) et destinés au deuxième chariot (25), sont disposés l'un au-dessus de l'autre et décalés dans la direction de déplacement du premier chariot (20), et le deuxième chariot (25) passe par-dessus le premier chariot dans la zone des rails de guidage.

10. Machine-outil selon l'une des revendications précédentes, **caractérisée en ce que** le premier chariot (20) est un chariot longitudinal et le deuxième chariot (25) un chariot transversal.
